# EUROPÄISCHE PATENTANMELDUNG

(11) **EP 0 870 939 A2**
(43) Veröffentlichungstag der Anmeldung: **14.10.1998**
(21) Anmeldenummer: 98106515.4
(22) Anmeldetag: 08.04.1998
(51) Int. Cl.: F16C 7/02

(54) **Pleuelstange für eine Hubkolben-Brennkraftmaschine**

(30) Priorität: 09.04.1997 AT 602/97
(71) Anmelder: DEUTZ Aktiengesellschaft, 51063 Köln (DE)
(72) Erfinder: Breitenberger, Manfred, Ing., 8020 Graz (AT)

(57) **Zusammenfassung**

Eine Pleuelstange (4) für eine Hubkolben-Brennkraftmaschine, insbesondere für eine Diesel-Brennkraftmaschine weist ein Pleuelauge (5) mit einem Kolbenbolzenlager (6) für einen in einem Kolben (7) befestigten Kolbenbolzen (8) auf, wobei das Pleuelauge (5) - in Richtung der Kolbenbolzenachse (8a) gemessen - an der dem Kolbenboden (7a) zugewandten Seite vorzugsweise eine geringere Länge (l) aufweist, als an der der Kurbelwelle (2) zugewandten Seite. Um den Anteil der oszillierenden Massen der Brennkraftmaschine zu vermindern und die Festigkeit der Pleuelstange (4) zu erhöhen ist vorgesehen, daR die Dicke (s) des Pleuelschaftes (4b) der Pleuelstange (4) im Bereich der Pleuelstangenachse (4a) zum Pleuellager (3) der Kurbelwelle (2) und/oder zum Pleuelauge (5) hin innerhalb eines Übergangsbereiches (10) kontinuierlich zunimmt.

## Beschreibung

Die Erfindung betrifft eine Pleuelstange für eine Hubkolben-Brennkraftmaschine, insbesondere für eine Diesel-Brennkraftmaschine, mit einem ein Kolbenbolzenlager für einen in einem Kolben befestigten Kolbenbolzen aufweisendes Pleuelauge, wobei das Pleuelauge - in Richtung der Kolbenbolzenachse gemessen - an der dem Kolbenboden zugewandten Seite vorzugsweise eine geringere Länge aufweist, als an der der Kurbelwelle zugewandten Seite.

Insbesondere bei Diesel-Brennkraftmaschinen ergibt sich der Zielkonflikt, daß einerseits die Pleuelstangen samt Kolbenbolzenlager so dimensioniert sein müssen, daß auch die größtmögliche betriebsmäßige Belastung keinen Schaden oder Ausfall von Komponenten verursacht, wobei zumeist noch ein Sicherheitsfaktor einkalkuliert wird. Andererseits ist das Gewicht des Motors in Hinsicht auf einen günstigen Verbrauch und die Größe der oszillierenden Massen in Hinblick auf ein gutes Schwingungsverhalten so klein wie möglich zu halten.

Der die Verbrennungskräfte in die Kurbelwelle einleitenden Pleuelstange kommt dabei als hochbeanspruchter Bauteil besonderes Augenmerk zu.

Es sind Pleuelstangen der eingangs genannten Art bekannt, bei denen der Bereich des Pleuelauges gestuft ausgeführt ist, um oszillierende Massen einzusparen. Dies ist insbesondere dadurch möglich, weil der der Kurbelwelle zugewandte Bereich des Pleuelauges und der Kolbenbolzenlagerung die Verbrennungsdrücke aufnehmen muß, während der dem Kolbenboden zugewandte Bereich im Vergleich dazu nur sehr gering belastet wird.

Weiters sind Pleuelstangen aus der US 2,566,080 A, der US 3,056,638 A oder der DE 1 013 129 C bekannt, welche in niedrig beanspruchten Bereichen unnötige Massenanhäufungen aufweisen, während hochbeanspruchte Bereiche zu wenig steif ausgebildet sind.

Es ist die Aufgabe der vorliegenden Erfindung diese Nachteile zu vermeiden und bei einer Pleuelstange der eingangs genannten Art das Verhältnis zwischen Belastbarkeit und oszillierenden Massen weiter zu verbessern.

Erfindungsgemäß wird dies dadurch erreicht, daß die Dicke des Pleuelschaftes der Pleuelstange im Bereich der Pleuelstangenachse zum Pleuellager der Kurbelwelle und/oder zum Pleuelauge hin innerhalb eines Übergangsbereiches kontinuierlich zunimmt.

Die Massenkräfte am Pleuelschaft verursachen unterschiedliche Biegemomente, die im unteren Bereich größer sind als im oberen Bereich. Diese Tatsache wird bei der erfindungsgemäßen Ausbildung der Pleuelstange berücksichtigt, wodurch einerseits Masse eingespart und andererseits die Festigkeit erhöht werden kann. Vorzugsweise ist dabei vorgesehen, daß die maximale Länge des Pleuelauges etwa der Länge des Pleuellagers an der Kurbelwelle entspricht. Um Spannungsspitzen zu vermeiden, geht vorzugsweise der Bereich der maximalen Länge des Pleuelauges stetig in den Bereich der minimalen Länge des Pleuelauges über, wobei besonders vorzugsweise der Übergangsbereich auf der der Kurbelwelle zugewandten Seite einer durch die Kolbenbolzenachse gehenden Normalebene auf die Pleuelstangenachse liegt. Dies ist möglich, weil die Kolbenführungskräfte im Vergleich zu den Verbrennungsdrücken relativ klein sind, so daß seitlich auf das Pleuelauge nur geringe Kräfte einwirken.

In einer sehr vorteilhaften Ausführungsvariante ist dabei etwa vorgesehen, daß die minimale Länge des Pleuelauges zwischen 0,4 und 0,7, vorzugsweise zwischen 0,5 und 0,6 der maximalen Länge des Pleuelauges liegt. Hervorragende Resultate lassen sich dabei erzielen, wenn minimale Länge des Pleuelauges etwa dem halben Durchmesser des Pleuelauges entspricht.

Weiters kann vorgesehen sein, daß der Pleuellagerbügel bei der Herstellung der Pleuelstange durch einen Brechvorgang vom Pleuelschaft getrennt wird, wodurch sich der Vorteil hoher Wirtschaftlichkeit sowie besonderer Bearbeitungsgenauigkeit ergibt.

Die Erfindung wird anhand der Figuren näher erläutert.

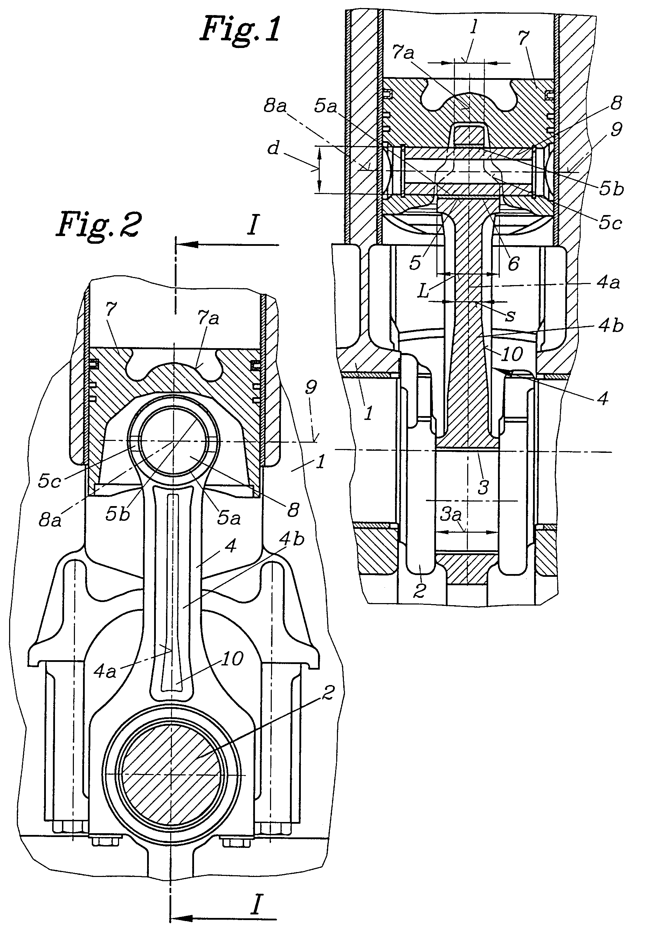

Es zeigen Fig. 1 die erfindungsgemäße Pleuelstange in einem Längsschnitt gemäß der Linie I-I in Fig. 2 und Fig. 2 eine Ansicht der Pleuelstange in der Kurbelwellenachse.

Auf einer im Kurbelgehäuse 1 gelagerten Kurbelwelle 2 ist über ein Pleuellager 3 eine Pleuelstange 4 drehbar gelagert. Im Pleuelauge 5 der Pleuelstange 4 ist über ein Kolbenbolzenlager 6 der in einem Kolben 7 befestigte Kolbenbolzen 8 gelagert. Das Pleuelauge 5 weist in dem der Kurbelwelle 2 zugewandten Bereich 5a eine größere Länge L auf, als in dem dem Kolbenboden 7a zugewandten Bereich 5b. Die kleinste Länge des Pleuelauges 5 ist mit l bezeichnet.

Zwischen dem Bereich 5a der größten Länge L und dem Bereich 5b der kleinsten Länge l des Pleuelauges 5 ist ein Übergangsbereich 5c ausgebildet, welcher auf der der Kurbelwelle 2 zugewandten Seite einer durch die Kolbenbolzenachse 8a gehenden Normalebene 9 auf die Pleuelstangenachse 4a liegt.

Die maximale Länge L entspricht in etwa der Pleuellagerlänge 3a des Pleuellagers 3 an der Kurbelwelle 2. Das Verhältnis zwischen minimaler Länge l zu maximaler Länge L des Pleuelauges 5 liegt zwischen 0,4 und 0,7, vorzugsweise zwischen 0,5 und 0,6. Im Ausführungsbeispiel entspricht die Länge l des Pleuelauges etwa dem halben Durchmessers d des Pleuelauges 5.

Wie insbesondere aus Fig. 1 hervorgeht, nimmt die Dicke s des Pleuelschaftes 4b zum Pleuellager 3 hin in einem Übergangsbereich 10 kontinuierlich zu. Analog dazu kann auch die Dicke s des Pleuelschaftes 4b zum Pleuelauge 5 hin kontinuierlich zunehmen. Dadurch kann die Steifigkeit und Festigkeit besonders beanspruchter Bereiche der Pleuelstange 4 erhöht und der Anteil der oszillierenden Massen der Brennkraftmaschine zugleich vermindert werden.

## Patentansprüche

1. Pleuelstange (4) für eine Hubkolben-Brennkraftmaschine, insbesondere für eine Diesel-Brennkraftmaschine, mit einem ein Kolbenbolzenlager (6) für einen in einem Kolben (7) befestigten Kolbenbolzen (8) aufweisendes Pleuelauge (5), wobei das Pleuelauge (5) - in Richtung der Kolbenbolzenachse (8a) gemessen - an der dem Kolbenboden (7a) zugewandten Seite vorzugsweise eine geringere Länge (l) aufweist, als an der der Kurbelwelle (2) zugewandten Seite,
dadurch gekennzeichnet, daß die Dicke (s) des Pleuelschaftes (4b) der Pleuelstange (4) im Bereich der Pleuelstangenachse (4a) zum Pleuellager (3) der Kurbelwelle (2) und/oder zum Pleuelauge (5) hin innerhalb eines Übergangsbereiches (10) kontinuierlich zunimmt.

2. Pleuelstange nach Anspruch 1,
dadurch gekennzeichnet, daß die maximale Länge (L) des Pleuelauges (5) etwa der Länge des Pleuellagers (3) an der Kurbelwelle (2) entspricht.

3. Pleuelstange nach Anspruch 1 oder 2,
dadurch gekennzeichnet, daß der Bereich der maximalen Länge (L) des Pleuelauges (5) stetig in den Bereich (5b) der minimalen Länge (l) des Pleuelauges (5) übergeht, wobei vorzugsweise der Übergangsbereich (5c) auf der der Kurbelwelle (2) zugewandten Seite einer durch die Kolbenbolzenachse (8a) gehenden Normalebene (9) auf die Pleuelstangenachse (4a) liegt.

4. Pleuelstange nach einem der Ansprüche 1 bis 3,
dadurch gekennzeichnet, daß die minimale Länge (l) des Pleuelauges (5) zwischen 0,4 und 0,7, vorzugsweise zwischen 0,5 und 0,6 der maximalen Länge (L) des Pleuelauges (5) liegt.

5. Pleuelstange nach einem der Ansprüche 1 bis 4,
dadurch gekennzeichnet, daß die minimale Länge (l) des Pleuelauges (5) etwa dem halben Durchmesser (d) des Pleuelauges (5) entspricht.

6. Pleuelstange nach einem der Ansprüche 1 bis 5,
dadurch gekennzeichnet, daß der Pleuellagerbügel (3b) durch einen Brechvorgang vom Pleuelschaft (4b) getrennt ist.
